# EUROPÄISCHE PATENTSCHRIFT

(11) **EP 4 528 212 B1**
(45) Veröffentlichungstag und Bekanntmachung des Hinweises auf die Patenterteilung: **12.08.2026**
(21) Anmeldenummer: 23199476.5
(22) Anmeldetag: 25.09.2023
(51) Int. Cl.: G01B 9/02091, G01B 11/06, G01B 11/30, G01N 21/952, G01B 5/00

(54) **BERÜHRUNGSLOSE VERMESSUNG EINES SICH DREHENDEN MESSOBJEKTS**
CONTACTLESS MEASUREMENT OF A ROTATING MEASUREMENT OBJECT
MESURE SANS CONTACT D'UN OBJET ROTATIF

(43) Veröffentlichungstag der Anmeldung: 26.03.2025
(73) Patentinhaber: Feinwerktechnik Otto Harrandt GmbH, 71397 Leutenbach-Nellmersbach (DE)
(72) Erfinder: Treede, Jan, 71397 Leutenbach-Nellmersbach (DE); Song, Samy, 71397 Leutenbach-Nellmersbach (DE)
(74) Vertreter: Kramer Barske Schmidtchen Patentanwälte PartG mbB

(56) Entgegenhaltungen:
- CN-A- 111 504 209
- DE-A1- 102013 223 945
- US-A1- 2007 146 691
- US-A1- 2011 128 552

## Beschreibung

### Technisches Gebiet

Die vorliegende Erfindung bezieht sich allgemein auf die Prüfung und Vermessung eines Messobjekts. Im Speziellen bezieht sich die vorliegende Erfindung auf eine Vorrichtung und ein Verfahren zur berührungslosen Vermessung eines sich drehenden Messobjekts wie beispielsweise eines Kabelabschnitts.

### Hintergrund

In der Elektro- und Elektronikindustrie werden häufig Drähte zum Transport von Strom und/oder Signalen eingesetzt. Für einen zuverlässigen und sicheren Transport von Strom und/oder Signalen werden die Drähte in der Regel mit einer Ummantelung gegen die Umwelt isoliert. Ein Draht mit einer isolierenden Ummantelung wird auch Kabel genannt. Drähte können aus Metallen wie Eisen, Kupfer, Messing, Aluminium, Silber, Gold oder Edelstahl hergestellt sein und unterschiedliche Querschnittformen aufweisen (rund, rechteckig etc.). Als isolierende Ummantelung können Beschichtungen beispielsweise aus Kunststoff wie eine PEEK Beschichtung (Polyetheretherketon) oder eine PAI Beschichtung (Polyamidimid), Lackierungen oder Pulverbeschichtungen verwendet werden.

Kabel werden beispielsweise in Elektromotoren (Hairpins, Spulen, Steckverbindunge etc.) verwendet. Für einen zuverlässigen und sicheren Betrieb der Elektromotoren ist die Maßhaltigkeit der Isolierung von entscheidender Bedeutung. Unabhängig von der Form des Drahtes sollte die Beschichtung beispielsweise eine beschädigungsfreie Mindestschichtdicke mit gleichbleibenden elektrischen Eigenschaften aufweisen. Mögliche Fehlerbilder, die eine zuverlässige Isolierung des Drahtes beeinflussen könnten, sind zum Beispiel Schichtdickenschwankungen über den Umfang (Kantenflucht, Hundeknocheneffekt) oder Schichtdickenschwankungen longitudinal (in Drahtlaufrichtung), die durch Schwankungen im Beschichtungs- oder Trockenprozess durch z.B. Verschleiß an Matrizen, unregelmäßigen Materialauftrag, Verunreinigungen der Oberfläche etc. bedingt sein können. Weitere mögliche Fehlerbilder, die eine zuverlässige Isolierung des Drahtes beeinflussen könnten, sind zum Beispiel Lufteinschlüsse in der Isolierung oder Mikrorisse oder Ablösungen der Isolierung vom Draht. Die Maßhaltigkeit der Beschichtung ist darüber hinaus auch zur automatisierten Weiterverarbeitung des Drahtes in Wickelmaschinen, Biegemaschinen oder weiteren Beschichtungsanlagen von großer Bedeutung.

Um zu prüfen, ob ein Kabel zuverlässig isoliert und für die Weiterverarbeitung geeignet ist, wird die Schichtdicke der jeweiligen isolierenden Ummantelung des Kabels ermittelt. Eine derzeit verwendete Technologie zum Vermessen der Schichtdicke ist die Wirbelstrom-Messung, die eine hohe Genauigkeit der ermittelten Schichtdicke, aber eine geringe räumliche Auflösung bereitstellt. Eine weitere derzeit verwendete Technologie zum Vermessen der Schichtdicke ist Radiometrie, die durch den Umgang mit strahlendem Material aufwändig und teuer ist. Zum Vermessen der Schichtdicke wird auch die Schliffbild-Technologie, die zeitaufwendig und durch das Verbrauchsmaterial Epoxy gesundheits- und umweltgefährdend ist, verwendet.

Für die Weiterverarbeitung eines Kabels kann es auch notwendig sein, die Isolierung eines Kabels bereichsweise zu entfernen und die Maßhaltigkeit des (darunter liegenden Drahtes) zu überprüfen. Das Entfernen der Isolierung ist beispielsweise notwendig, wenn der Draht geschweißt, gelötet oder mechanisch kontaktiert werden soll. Die Isolierung kann zum Beispiel mechanisch durch Fräsen oder schälen oder durch gepulste Laser entfernt werden. Die vollständige Entfernung der Isolierung ist dabei wichtig für die Qualität der Kontaktierung. Anhaftungen von Isolationsmaterial führt beim Löten oder Schweißen durch Verdampfen zu Lunkern, Ausbrüchen (Vulkane) oder Porositäten und Einschlüssen.

In US 2007/146691 A1 werden eine Vorrichtung und ein Verfahren zum Erkennen niederfrequenter spiegelnder Oberflächenfehler auf beschichteten Substraten beschrieben. Das Verfahren zum Erkennen von spiegelnden Oberflächenfehlern mit niedriger Frequenz umfasst: Auftreffen sichtbarer elektromagnetischer Strahlung oder Licht aus einer elektromagnetischen Strahlungsquelle in einem schrägen Winkel auf das beschichtete Substrat, Reflektieren der sichtbaren elektromagnetischen Strahlung vom beschichteten Substrat auf ein Schirmmaterial, um ein reflektiertes Bild des spiegelnden Oberflächenfehlers zu erzeugen, und Aufzeichnen des reflektierten Bildes vom Schirmmaterial mit einem lichtempfindlichen Gerät, um ein aufgezeichnetes reflektiertes Bild zu erzeugen.

US 2011/128552 A1 betrifft Abtastmesssysteme, die ein Objekt linear und rotierend abtasten, insbesondere optische Abtastmesssysteme und in bestimmten Ausführungsformen interferometrische Abtastmesssysteme.

DE 10 2013 223945 A1 beschreibt eine Messvorrichtung und ein Verfahren zur Vermessung von Prüfobjekten. Die zu vermessenden Prüfobjekte weisen insbesondere zumindest abschnittsweise mindestens eine hohlzylinderförmige Materialschicht auf.

Der vorliegenden Erfindung liegt das technische Problem zugrunde, ein verbessertes Messsystem und Messverfahren bereitzustellen.

### Darstellung der Erfindung

Gemäß einem ersten Aspekt wird das der Erfindung zugrundeliegende technische Problem durch eine Vorrichtung zur berührungslosen Vermessung eines sich drehenden Messobjekts wie beispielsweise eines Kabelabschnitts gelöst. Die Vorrichtung weist eine Strahlungsquelle, die dazu ausgebildet ist, einen Messtrahl auszusenden, um damit das Messobjekt zu bestrahlen, und einen Sensor, der dazu ausgebildet ist, die von dem Messobjekt reflektierten Strahlen zu erfassen, auf. Ferner weist die Vorrichtung eine erste Halterung und eine zweite, von der ersten Halterung beabstandete zweite Halterung, auf. Die erste und zweite Halterung sind um eine gemeinsame Drehachse drehbar gelagert und dazu ausgebildet, das Messobjekt derart zu befestigen, dass das Messobjekt um seine Längsachse drehbar ist, und über einen Messbereich, der sich zwischen der ersten und der zweiten Halterung und in Richtung der Längsachse des Messobjekts erstreckt, mit dem Messtrahl der Strahlungsquelle bestrahlbar ist. Die Vorrichtung weist auch eine Antriebseinheit und eine Steuereinheit auf. Die Antriebseinheit steht mit der ersten und/oder zweiten Halterung in Antriebsverbindung und ist dazu ausgebildet, die erste und/oder zweite Halterung und das darin gehaltene Messobjekt zu drehen. Die Steuerungseinheit ist dazu ausgebildet, die Strahlungsquelle und die Antriebseinheit derart zu steuern, dass das drehbar befestigte Messobjekt in dem Messbereich mit dem Messtrahl der Strahlungsquelle bestrahlt wird und während der Bestrahlung um seine Längsachse gedreht wird. Ferner weist die Vorrichtung einen verschiebbaren Schlitten, auf dem die erste und die zweite Halterung derart angeordnet sind, dass das Messobjekt von einer ersten, von der Strahlungsquelle weg verschobenen Position in eine zweite, zur Strahlungsquelle hin verschobenen Position verschiebbar ist, und einen Anschlag, der eine Anschlagsfläche aufweist, auf. Die Anschlagfläche ist dazu ausgebildet, dass das Messobjekt, während es sich bei der Bestrahlung um seine Längsachse dreht, an der Anschlagsfläche entlanggleitet. Der Anschlag ist derart positioniert, dass das Messobjekt in der zweiten Position mit der Anschlagsfläche des Anschlags in Berührung steht. Ferner weist die Vorrichtung ein Federelement, das den verschiebbaren Schlitten in Richtung der Strahlungsquelle drückt, auf.

Gemäß einem zweiten Aspekt wird das der Erfindung zugrundeliegende technische Problem durch ein Verfahren zur berührungslosen Vermessung eines sich drehenden Messobjekts wie beispielsweise eines Kabelabschnitts gelöst. Das Verfahren weist den Schritt des Bereitstellens einer Strahlungsquelle, die dazu ausgebildet ist, einen Messtrahl auszusenden, um damit das Messobjekt zu bestrahlen, und den Schritt des Bereitstellens eines Sensors, der dazu ausgebildet ist, die von dem Messobjekt reflektierten Strahlen zu erfassen, auf. Ferner weist das Verfahren den Schritt des Befestigens des Messobjekts, wobei das Messobjekt derart befestigt wird, dass das Messobjekt um seine Längsachse drehbar ist und über einen Messbereich mit dem Messtrahl der Strahlungsquelle bestrahlbar ist. Ferner weist das Verfahren den Schritt des Lagerns der Befestigung auf einem verschiebbaren Schlitten und den Schritt des Positionierens eines Anschlags mit einer Anschlagsfläche auf. Die Befestigung wird derart gelagert, dass die Befestigung von einer ersten, von der Strahlungsquelle weg verschobenen Position in eine zweite, zur Strahlungsquelle hin verschobenen Position verschiebbar ist. Der Anschlag wird derart positioniert, dass das Messobjekt in der zweiten Position mit der Anschlagsfläche des Anschlags in Berührung steht. Auch umfasst das Verfahren den Schritt des Verschiebens der Befestigung solange in Richtung der Strahlungsquelle, bis das Messobjekt gegen die Anschlagsfläche des Anschlags stößt, und den Schritt des Drückens des verschiebbaren Schlittens mit einem Federelement in Richtung der Strahlungsquelle. Auch umfasst das Verfahren den Schritt des Bestrahlens des Messobjekts mit dem Messtrahl der Strahlungsquelle und Drehen des Messobjekts während des Bestrahlens, und den Schritt des Erfassens der von dem Messobjekt reflektierten Strahlen mit dem Sensor.

Der Erfindung liegt der Gedanke zugrunde, ein zu vermessendes Objekt (Messobjekt) mithilfe eines Messtrahls über einen Messbereich, der sich in Richtung der Längsachse des Messobjekts erstreckt, berührungslos zu vermessen und es dabei automatisch und gleichzeitig mit der Vermessung um seine Längsachse zu drehen. Das Messobjekt kann zum Beispiel ein Kabelabschnitt sein, der vor der Weiterverarbeitung zu Komponenten der Elektro- und Elektronikindustrie wie beispielsweise Spulen in Elektromotoren auf Maßhaltigkeit überprüft wird. Durch die automatische Drehung des Messobjekts kann das Messobjekt entlang des Messbereichs über einen Abschnitt des Umfangs oder den gesamten Umfang des Messobjekts vermessen werden. Mit dem erfindungsgemäßen Gegenstand ist eine schnelle und hochgenaue Vermessung des Messobjekts und die Bestimmung von Parametern wie der Maßhaltigkeit einer Isolation eines Kabelabschnitts und/oder der Oberflächenbeschaffenheit von abisolierten Oberflächen eines Kabelabschnitts möglich.

Die Steuerungseinheit ist dazu ausgebildet, die Strahlungsquelle und die Antriebseinheit derart zu steuern, dass das drehbar befestigte Messobjekt in dem Messbereich mit dem Messtrahl der Strahlungsquelle bestrahlt wird und automatisch, während der Bestrahlung, um seine Längsachse gedreht wird.

Die Ansteuerung der Strahlungsquelle und der Antriebseinheit durch die Steuereinheit erlaubt ein hohes Maß an Automatisierung bei der Durchführung der Vermessung, da beispielsweise ein händisches Drehen des Messobjekts während des Vermessens nicht notwendig ist.

Durch ein gleichzeitiges Drehen des Messobjekts und Bestrahlen des Messobjekts mit dem Messtrahl lassen sich darüber hinaus hohe Messgeschwindigkeiten realisieren. Eine Steuerungseinheit, die in der Lage ist, die Antriebseinheit derart zu steuern, dass das drehbar befestigte Messobjekt während des Vermessens gleichzeitig gedreht wird, also derart zu steuern, dass das Drehen des Messobjekts und das Bestrahlen des Messobjekts simultan stattfinden, kann selbstverständlich auch so betrieben werden, dass das Messobjekt nicht gedreht wird, während es bestrahlt wird, sondern die Bestrahlung des Messobjekts zu Stillstandzeiten des Messobjekts durchgeführt wird. Entsprechend kann die Steuerungseinheit wahlweise die Drehung und/oder die Bestrahlung unterbrechen und nach einer Pause wieder aufnehmen. So ist zum Beispiel ein erster Betriebsmodus der Vorrichtung durch die Steuerungseinheit möglich, bei dem sich das Messobjekt dreht, während es bestrahlt wird, und ein zweiter Betriebsmodus der Vorrichtung durch die Steuerungseinheit möglich, bei dem sich das Messobjekt jeweils um 90° dreht und im Stillstand von der Strahlungsquelle bestrahlt wird.

Durch ein gleichzeitiges Drehen des Messobjekts und Bestrahlen des Messobjekts mit dem Messtrahl lassen sich zuverlässige Messungen auch von Randbereichen des Messobjekts wie beispielsweise der Eckradien von Kabelabschnitten mit rechteckigem Querschnitt erzielen. Werden beispielsweise die vier Seiten eines Kabelabschnitts mit rechteckigem Querschnitt jeweils im Stillstand nacheinander (frontal) vermessen (wobei der Kabelabschnitt zwischen den vier Messungen jeweils um 90° gedreht und dabei nicht bestrahlt wird), so kann es messtechnisch Probleme bereiten, die Eckradien des Kabelabschnitts korrekt zu erfassen und zu vermessen. Mit einem gleichzeitigen Drehen des Messobjekts und Bestrahlen des Messobjekts hingegen ist es möglich, auch die Eckradien in das Messfeld des Messtrahls hineinzudrehen und zuverlässige Messungen der Eckradien des Kabelabschnitts zu erzielen.

Die Steuerungseinheit kann dazu ausgebildet sein, die Strahlungsquelle und die Antriebseinheit derart zu steuern, dass das drehbar befestigte Messobjekt in dem Messbereich mit dem Messtrahl der Strahlungsquelle bestrahlt wird und während der Bestrahlung kontinuierlich, vorzugsweise mit gleichbleibender Geschwindigkeit gedreht wird und/oder während der Bestrahlung mindestens einmal komplett um seine Längsachse gedreht wird.

Ein kontinuierliches Drehen bedeutet, dass es während des Drehens zu keinen Unterbrechungen (keinem Stillstand) kommt. Ein kontinuierliches Drehen, insbesondere ein Drehen mit gleichbleibender Geschwindigkeit hat den Vorteil, dass eine genaue Vermessung auch in Bereichen wie beispielsweise den Eckradien von Kabelabschnitten mit rechteckigem Querschnitt möglich ist. Ein Drehen mindestens einmal komplett um die Längsachse des Messobjekts ermöglicht eine Vermessung des Messobjekts entlang des Messbereichs um seinen gesamten Umfang. So kann eine Messung z.B. der Schichtdicke über den gesamten Umfang erfolgen. Auch eine Messung von beschichtetem Runddraht ist so möglich.

Der Messbereich, über den das Messobjekt entlang seiner Längsachse bestrahlt wird, erstreckt sich beispielsweise über eine Länge von 0,1 bis 5 cm. Die Strahlungsquelle kann mit einem optischen System ausgestattet sein, das es ermöglicht, den Messtrahl derart umzulenken, dass er den gesamten Messbereich bestrahlen kann. Die Strahlungsquelle als solche muss dann nicht bewegt werden.

Mithilfe des Sensors werden durch die Drehung des Messobjekts und durch die Bewegung des Messtrahls in Längsrichtung des Messobjekts Messdaten von Punkten, die über die Länge und den Umfang des Messobjekts verteilt sind, gesammelt.

Die Strahlungsquelle und der Sensor können beispielsweise Teil eines interferometrischen Messystems sein. Interferometrische Messysteme nutzen die Effekte, die auftreten, wenn zwei oder mehr Strahlen derselben Strahlungsquelle mit unterschiedlicher Weglänge überlagert werden. Beispielsweise kann der Flying Spot von Precitec GmbH & Co. KG, wie er zum Anmeldedatum der vorliegenden Erfindung verfügbar ist, als Strahlungsquelle und Sensor verwendet werden.

Die Strahlungsquelle und der Sensor können derart ausgebildet sein, dass mit ihnen ein hochgenauer Scan der Oberfläche des Messobjekts, beispielsweise mit einer Auflösung im Bereich von 1 - 10 µm, erstellt werden kann.

Die Vorrichtung weist eine erste Halterung und eine zweite, von der ersten Halterung beabstandete zweite Halterung, die um eine gemeinsame Drehachse drehbar gelagert sind, auf. Mithilfe der ersten und zweiten Halterung ist es möglich, dass Messobjekt derart festzuhalten, dass es sich während des Vermessens um seine Längsachse dreht und während des Vermessens nicht verrutscht, damit hochgenau Messergebnisse erzielt werden können.

Gemäß einer beispielhaften Ausführungsform weist die erste und/oder die zweite Halterung Spannbacken auf. Die Spannbacken sind beweglich angeordnet und dazu ausgebildet, so aufeinander zu bewegt zu werden, dass sie das Messobjekt festspannen. Zumindest eine Spannbacke kann durch ein Federelement derart vorgespannt sein, dass die Spannbacken aufeinander zu bewegt werden.

Spannbacken stellen eine Aufnahme für das Messobjekt dar, die ein schnelles und unkompliziertes Einspannen und Ausspannen des Messobjekts erlaubt. Für verschiedene Messobjekt-Geometrien und Messobjekt-Abmessungen können verschiedene Aufnahmen notwendig sein, die über geeignete werkstückspezifische Spannbacken dargestellt werden können. Beispielsweise können die Spannbacken so ausgebildet sein, dass sie ein Messobjekt mit rechteckigem Querschnitt positionsfest einspannen können. Oder sie können so ausgelegt sein, dass sie ein Messobjekt mit rundem Querschnitt positionsfest einspannen können. Mithilfe von Spannbacken ist ein Festspannen des Messobjekts ohne zusätzlich vorbereitende Schritte wie ein Anschleifen oder Einbetten in des Messobjekts in Epoxidharz oder Ähnliches möglich und gleichzeitig bietet ein Festspannen mit Spannbacken eine hinreichend genaue Aufnahme für die Vermessung.

Gemäß einer beispielhaften Ausführungsform weist die erste und/oder die zweite Halterung zusätzlich zu den oben beschriebenen Spannbacken einen drehbar gelagerten äußeren Spannring, der mit der Antriebseinheit in Antriebsverbindung steht, und einen inneren Spannring, der zu dem äußeren Spannring koaxial und verdrehbar angeordnet ist, auf. Der äußere Spannring und der innere Spannring sind derart mit den Spannbacken gekoppelt, dass sich die Spannbacken durch ein Verdrehen des äußeren Spannrings zu dem inneren Spannring in eine erste Richtung voneinander weg bewegen und in eine zweite Richtung aufeinander zu bewegen.

Mit der hier beschriebenen Ausführungsform ist es möglich, die Spannbacken mithilfe eines Verdrehens des äußeren Spannrings zu dem inneren Spannring zu öffnen. Durch ein Verdrehen des äußeren Spannrings zu dem inneren Spannring in eine erste Drehrichtung kann die Aufnahme geöffnet und das Messobjekt in die Aufnahme eingebracht werden. Durch ein Verdrehen des äußeren Spannrings zu dem inneren Spannring in eine zweite, der ersten Drehrichtung entgegengesetzten Drehrichtung, kann die Aufnahme wieder geschlossen werden. Das relative Verdrehen des äußeren zu dem inneren Spannring stellt eine praktische und gut wiederholbare (automatisierbare) Methode zum Öffnen und Schließen der Aufnahme (Spannbacken) der ersten bzw. zweiten Halterung dar.

Ein Verdrehen des äußeren Spannrings zu dem inneren Spannring kann dadurch realisiert werden, dass der innere Spannring einen in Axialrichtung des inneren Spannrings vorstehenden Vorsprung wie zum Beispiel einen Stift oder ähnliches aufweist und die Vorrichtung ferner eine Sperreinrichtung aufweist, die derart ausgebildet ist, dass sie den Vorsprung des inneren Spannrings in einer ersten Drehrichtung des inneren Spannrings passieren lässt und in einer zweiten Drehrichtung des inneren Spannrings nicht passieren lässt. Die Sperreinrichtung kann beispielsweise wie ein Türschnapper ausgebildet sein und ein einseitig abgeschrägtes Keilelement aufweisen, das verschiebbar gelagert ist und durch den Vorsprung des inneren Spannrings, der gegen die Abschrägung des Keilelements drückt, derart verschoben werden kann, dass es den Weg für den Vorsprung des inneren Spannrings freigibt. Die Vorrichtung kann so ausgebildet sein, dass der innere Spannring derart mit dem äußeren Spannring gekoppelt ist, dass sich, wenn sich der äußere Spannring, der mit der Antriebseinheit in Antriebsverbindung steht, dreht, auch der innere Spannring dreht. Das Federelement übt eine Kraft auf den inneren Spannring aus, der diesen dazu treibt, sich gemeinsam mit dem äußeren Spannring zu drehen. Durch die Sperreinrichtung kann die Drehung nur des inneren Spannrings in eine der beiden Drehrichtungen gestoppt werden und dadurch ein Verdrehen des äußeren Spannrings zu dem inneren Spannring erreicht werden. Über ein Verändern der Antriebsrichtung des äußeren Spannrings kann die aus Spannbacken gebildete Aufnahme geöffnet und geschlossen werden.

Gemäß einer beispielhaften Ausführungsform weist die Antriebseinheit einen Motor, wie zum Beispiel einen Elektromotor, und mindestens einen Riemen auf. Der Motor steht über den mindestens einen Riemen mit der ersten und/oder zweiten drehbar gelagerten Halterung in Antriebsverbindung.

Die Antriebseinheit kann dazu ausgebildet sein, die erste und/oder zweite drehbar gelagerte Halterung in beide Drehrichtungen zu drehen.

Dies ermöglicht zum einen ein Drehen des Messobjekts während des Bestrahlens in die erste oder in die zweite Drehrichtung. Darüber hinaus ermöglicht dies in Zusammenwirkung mit der oben beschriebenen Ausführungsform, bei der die erste und zweite Halterung jeweils Spannbacken, einen äußeren Spannring, einen inneren Spannring, einen Vorsprung und eine Sperreinrichtung aufweisen, dass sich die Spannbacken durch ein Drehen des äußeren Spannrings in die erste Drehrichtung öffnen und durch ein Drehen in die zweite Drehrichtung schließen. Die Antriebseinheit hat somit eine Doppelfunktion: zum einen dient sie zum Drehen des Messobjekts während des Vermessens und zum anderen dient sie zum Öffnen und Schließen der durch Spannbacken gebildeten Aufnahme der ersten und zweiten Halterung. Mit dieser Ausführungsform kann ein hohes Maß an Automatisierung bei der Durchführung der Vermessung erreicht werden, da das Öffnen und Schließen der Aufnahme mithilfe der Steuerungseinheit, die die Antriebseinheit steuert, möglich ist.

Erfindungsgemäß ist die erste und die zweite Halterung zur Veränderung ihres Abstands zur Strahlungsquelle auf einem verschiebbaren Schlitten angeordnet.

Über eine Verschiebbarkeit von der ersten und zweiten Halterung kann das Messobjekt in einer ersten, von der Strahlungsquelle weg verschobenen Position bequem durch die erste und zweite Halterung befestigt werden. Durch ein Verschieben in eine zweite, zu der Strahlungsquelle hin verschobenen Position kann die erste und zweite Halterung in den für die Vermessung richtigen Abstand von der Strahlungsquelle (Fokusbereich der Strahlungsquelle) gebracht werden. Die Vorrichtung weist erfindungsgemäß ein Federelement auf, das den verschiebbaren Schlitten in Richtung der Strahlungsquelle drückt.

Erfindungsgemäß weist die Vorrichtung ferner einen Anschlag mit einer Anschlagsfläche auf, die dazu ausgebildet ist, dass das Messobjekt, während es sich bei der Bestrahlung um seine Längsachse dreht, an der Anschlagsfläche entlanggleitet.

Die Anschlagsfläche ist so angeordnet, dass sie in den zwischen der ersten und zweiten Halterung liegenden Bereich hineinragt und das von der ersten und zweiten Halterung festgehaltene Messobjekt, wenn es sich dreht während es bestrahlt wird, an der Anschlagsfläche vorbeigleitet (vorbeidreht). Durch ein Anschlagen des Messobjekts an der Anschlagsfläche kann somit eine optimale Positionierung des Messobjekts im Verhältnis zur Strahlungsquelle (Abstand Oberfläche des Messobjekts zu der Strahlungsquelle) gewährleistet werden. Es können mehrere Anschläge mit jeweils einer Anschlagsfläche vorgesehen sein, die entlang der Längsachsrichtung des Messobjekts verteilt sind und dafür sorgen, dass das Messobjekt über seine Länge durch die Anschlagsflächen geführt wird und dadurch nicht ausbeult. Beispielsweise können zwei Anschläge so angeordnet sein, dass sich der Messbereich zwischen den Anschlägen befindet. Bei einer Vorrichtung, bei der ein Verschieben der ersten und zweiten Halterung in eine zweite, zu der Strahlungsquelle hin verschobenen Position möglich ist, kann die zweite Position dadurch festgelegt sein, dass die erste und zweite Halterung durch eine Federkraft in Richtung der Strahlungsquelle und gegen die mindestens eine Anschlagsfläche gedrückt wird.

Gemäß einer beispielhaften Ausführungsform weist die Vorrichtung eine Recheneinheit auf, die dazu ausgebildet ist, aus den von dem Messobjekt reflektierten und mit dem Sensor erfassten Strahlen den Verlauf von Messgrößen wie beispielsweise einer Schichtdicke oder einer Oberflächenbeschaffenheit für den bestrahlten Bereich des Messobjekts zu bestimmen.

Mithilfe dieser Ausführungsform lässt sich ein hochgenauer Scan von Umfangsabschnitten oder des gesamten Umfangs entlang der Längsachse des Messobjekts erstellen. Das Ergebnis ist eine hochaufgelöste 3D Punktwolke. Auf Basis der 3D Punktwolke lassen sich mithilfe der Recheneinheit (und entsprechender Vermessungssoftware) verschiedene Parameter, wie zum Beispiel die Schichtdicke einer Isolation, das Gesamtvolumen von Anhaftungen an einer Oberfläche, die maximale Höhe von Anhaftungen, ein maximales und durchschnittliches Volumen der Anhaftungen und die Verteilung der Anhaftungen über die Fläche bestimmen. Selbstverständlich verfügt die Vorrichtung über entsprechende Ausgabeeinheiten, die beispielsweise eine Darstellung der Schichtdicke von Isolationsbeschichtungen in einem 3D Modell ermöglicht.

### Kurze Beschreibung der Zeichnungen

Im Folgenden sind beispielhafte Ausführungsformen der vorliegenden Erfindung unter Bezugnahme auf die beigefügten Zeichnungen näher beschrieben und erläutert.
Fig. 1 zeigt eine beispielhafte Ausführungsform der Erfindung in perspektivischer Ansicht von schräg oben.
Fig. 2 zeigt die erste und zweite Halterung 15, 16 sowie die Antriebseinheit 20 der in Fig. 1 gezeigten beispielhaften Ausführungsform der Vorrichtung 1 in perspektivischer Ansicht von schräg oben.
Fig. 3 zeigt die erste und zweite Halterung 15, 16 sowie die Antriebseinheit 20 der in Fig. 1 gezeigten beispielhaften Ausführungsform in einer Seitenansicht.
Fig. 4 zeigt die in der Fig. 1 gezeigte beispielhafte Ausführungsform in vereinfachter Darstellung in einer Draufsicht in einer ersten Position.
Fig. 5 zeigt die in der Fig. 1 gezeigte beispielhafte Ausführungsform in vereinfachter Darstellung in einer Draufsicht in einer zweiten Position.
Fig. 6 zeigt die in der Fig. 1 gezeigte beispielhafte zweite Halterung 16 in einer vergrößerten Seitenansicht in geschlossener Stellung.
Fig. 7 zeigt die in der Fig. 6 dargestellte zweite Halterung 16 in geöffneter Stellung.
Fig. 8 zeigt zur Verdeutlichung der Kopplung des äußeren Spannrings mit den Scheiben einzelne Bauteile der in der Fig. 6 und Fig. 7 dargestellten zweiten Halterung 16.

### Detaillierte Beschreibung von Ausführungsbeispielen der Erfindung

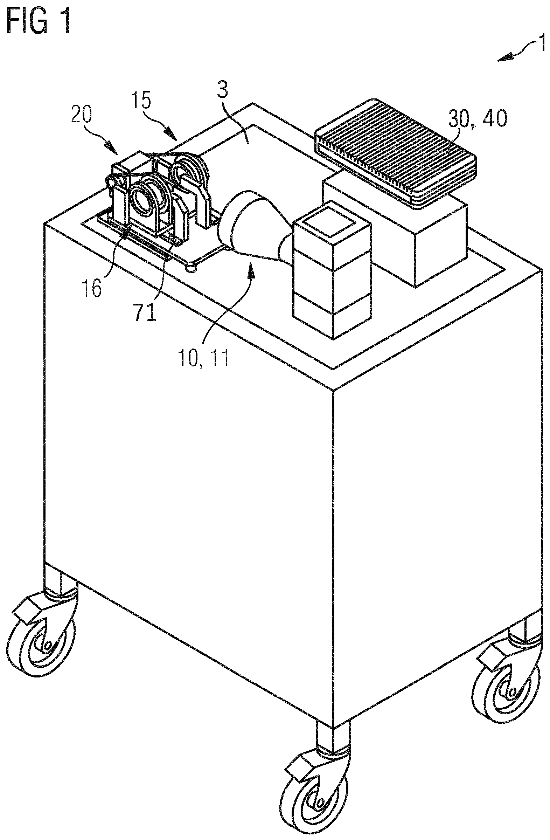

Fig. 1 zeigt eine beispielhafte Ausführungsform der Erfindung in perspektivischer Ansicht von schräg oben. Die Vorrichtung 1 ist auf einer Arbeitsplatte 3 positioniert.

Im vorderen linken Bereich der Arbeitsplatte 3 ist eine erste Halterung 15 und eine zweite, von der ersten Halterung 15 beabstandete zweite Halterung 16 gezeigt. Die erste und zweite Halterung 15, 16 sind drehbar auf der Arbeitsplatte 3 befestigt. Die erste und zweite Halterung 15, 16 sind so ausgebildet, dass mit ihnen ein Messobjekt 50 befestigt werden kann. Das Messobjekt 50 (nicht gezeigt) erstreckt sich im befestigten Zustand zwischen der ersten und zweiten Halterung 15, 16. Neben der ersten und zweiten Halterung 15, 16 ist eine Antriebseinheit 20 angeordnet. Die Antriebseinheit 20 weist Riemen auf, die mit der ersten und der zweiten Halterung 15, 16 zum Antreiben der jeweiligen Halterung gekoppelt sind. Die Antriebseinheit 20, die erste und zweite Halterung 15, 16 sind über einen Schlitten auf Laufschienen 71 angeordnet.

Im vorderen rechten Bereich der Arbeitsplatte 3 ist eine Strahlungsquelle 10 und ein Sensor 11 angeordnet. Die Strahlungsquelle 10 und der Sensor 11 sind in einer gemeinsamen Einheit untergebracht. Diese Einheit ist ebenfalls auf der Arbeitsplatte 3 angeordnet und derart ausgerichtet, dass ein Messtrahl S, der von der Strahlungsquelle 10 ausgesendet werden kann, in Richtung des zwischen der ersten und zweiten Halterung 15, 16 liegenden Bereichs strahlt. Mit dem Messtrahl S kann somit das Messobjekt 50, das durch die erste und zweite Halterung 15, 16 befestigt ist, bestrahlt werden. Durch ein Verschieben auf den Laufschienen 71 können die Antriebseinheit 20, die erste und zweite Halterung 15, 16 auf die Strahlungsquelle 10 und den Sensor 11 zubewegt und von diesen wegbewegt werden.

Neben der Strahlungsquelle 10 und dem Sensor 11 ist eine Steuerungseinheit 30 angeordnet. Die Steuerungseinheit ist dazu ausgebildet, die Strahlungsquelle 10 und die Antriebseinheit 20 zu steuern. Die Signal- und/oder Datenübertragung zwischen der Steuerungseinheit 30, der Strahlungsquelle 10 und die Antriebseinheit 20 kann kabellos oder kabelgebunden erfolgen. Integral ausgeführt mit der Steuerungseinheit ist eine Recheneinheit 40, die dazu ausgebildet ist, aus von dem Sensor 11 übermittelten Daten den Verlauf von Messgrößen wie beispielsweise einer Schichtdicke oder einer Oberflächenbeschaffenheit für den bestrahlten Bereich des Messobjekts 50 zu bestimmen.

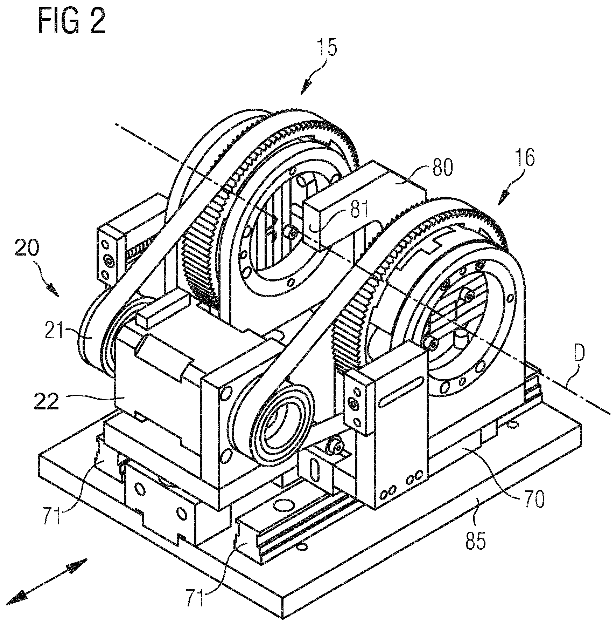

Fig. 2 zeigt die erste und zweite Halterung 15, 16 sowie die Antriebseinheit 20 der in Fig. 1 gezeigten beispielhaften Ausführungsform der Vorrichtung 1 in perspektivischer Ansicht von schräg oben. Die Antriebseinheit 20 weist einen Motor 22 und zwei Riemen 21 auf. Einer der zwei Riemen 21 ist mit dem Motor 22 und der ersten Halterung 15 zum Antreiben verbunden. Der andere der zwei Riemen 21 ist mit dem Motor 22 und der zweiten Halterung 16 zum Antreiben verbunden. Die Antriebseinheit 20, die erste und zweite Halterung 15, 16 sind über jeweils einen Schlitten 70 derart auf zwei Laufschienen 71 angeordnet, dass sie in Richtung des in der Fig. 2 dargestellten Pfeils auf der Laufschiene hin- und herverschiebbar sind. Die Laufschienen 71 sind auf eine Bodenplatte 85 befestigt. Die Bodenplatte 85 wiederum ist auf der Arbeitsplatte 3 (nicht gezeigt) befestigt. Fest auf der Bodenplatte 3 sind Anschläge 80 befestigt. Ein Anschlag 80 ist in der Fig. 2 durch die Halterung 16 verdeckt und deshalb nicht sichtbar. Der Anschlag 80 weist eine Anschlagsfläche 81 auf. Die Anschlagsfläche 81 ist so angeordnet, dass sie in den zwischen der ersten und zweiten Halterung liegenden Bereich hineinragt.

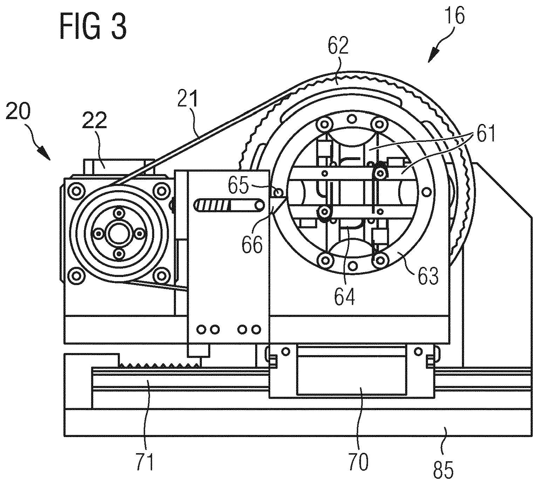

Fig. 3 zeigt die erste und zweite Halterung 15, 16 sowie die Antriebseinheit 20 der in Fig. 1 gezeigten beispielhaften Ausführungsform in einer Seitenansicht. Über jeweils einen Schlitten 70 sind die Antriebseinheit 20, die erste und zweite Halterung 15, 16 verschiebbar auf zwei Laufschienen 71 angeordnet. Die Laufschienen 71 sind auf eine Bodenplatte 85 befestigt. Die zweite Halterung 16 weist einen drehbar gelagerten äußeren Spannring 62 auf. Der drehbar gelagerte äußere Spannring 62 ist über einen Riemen 21 mit dem Motor 22 verbunden. Die zweite Halterung 16 weist ferner einen inneren Spannring 63 auf. Der innere Spannring 63 ist zu dem äußeren Spannring 62 koaxial und verdrehbar angeordnet. Die zweite Halterung 16 weist ferner Spannbacken 61 und Federelemente 64 auf. Die Spannbacken 61 sind beweglich angeordnet und dazu ausgebildet, so aufeinander zu bewegt zu werden, dass sie das Messobjekt 50 zwischen sich festspannen. Durch Drehen des äußeren Spannrings 62 bei blockiertem inneren Spannring 63 bewegen sich die Spannbacken 61 von der Drehachse D der ersten und zweiten Halterung weg oder auf sie zu. Die Federelemente 64 sind so angeordnet, dass sie die Spannbacken in die geschlossene Stellung vorspannen. Die in der Fig. 3 gezeigten Spannbacken 61 sind für eine Messobjekt 50 mit rechteckigem Querschnitt ausgelegt. Der äußere Spannring 62 und der innere Spannring 63 sind derart mit den Spannbacken 61 gekoppelt, dass sich die Spannbacken 61 durch ein Verdrehen des äußeren Spannrings 62 zu dem inneren Spannring 63 in eine erste Richtung voneinander weg bewegen (öffnen) und in eine zweite Richtung aufeinander zu bewegen (schließen). Genauer gesagt, öffnen sich die Spannbacken 61, wenn sich bei feststehendem inneren Spannring 63 der äußere Spannring 62 gegen den Uhrzeigersinn dreht. Und die Spannbacken 61 schließen sich, wenn sich bei feststehendem inneren Spannring 63 der äußere Spannring 62 in dem Uhrzeigersinn dreht.

Die in der Fig. 3 gezeigte beispielhafte Vorrichtung 1 weist auch einen Vorsprung 65 und eine Sperreinrichtung 66 auf. Der Vorsprung 65 ist auf dem inneren Spannring 63 angeordnet und ragt in Drehachsrichtung des inneren Spannrings in die der ersten Halterung 15 entgegengesetzten Richtung hervor (nach vorne aus der Zeichenebene heraus). Die Sperreinrichtung 66 ist derart ausgebildet, dass sie den Vorsprung 65 des inneren Spannrings 63 in einer ersten Drehrichtung des inneren Spannrings 63 passieren lässt und in einer zweiten Drehrichtung des inneren Spannrings 63 stoppt. Auf diese Weise kann der innere Spannring 63 durch die Sperreinrichtung 66 festgehalten werden, wenn der Riemen 21 den äußeren Spannring 62 gegen den Uhrzeigersinn dreht. Dadurch verdreht sich der äußere Spannring 62 relativ zu dem inneren Spannring 63 und die Spannbacken 61 öffnen sich. Wenn der Riemen 21 den äußeren Spannring 62 in dem Uhrzeigersinn dreht, wird die Sperreinrichtung 66 durch den Vorsprung 65 des inneren Spannrings 63 derart verschoben werden, dass sie den Vorsprung 65 passieren lässt.

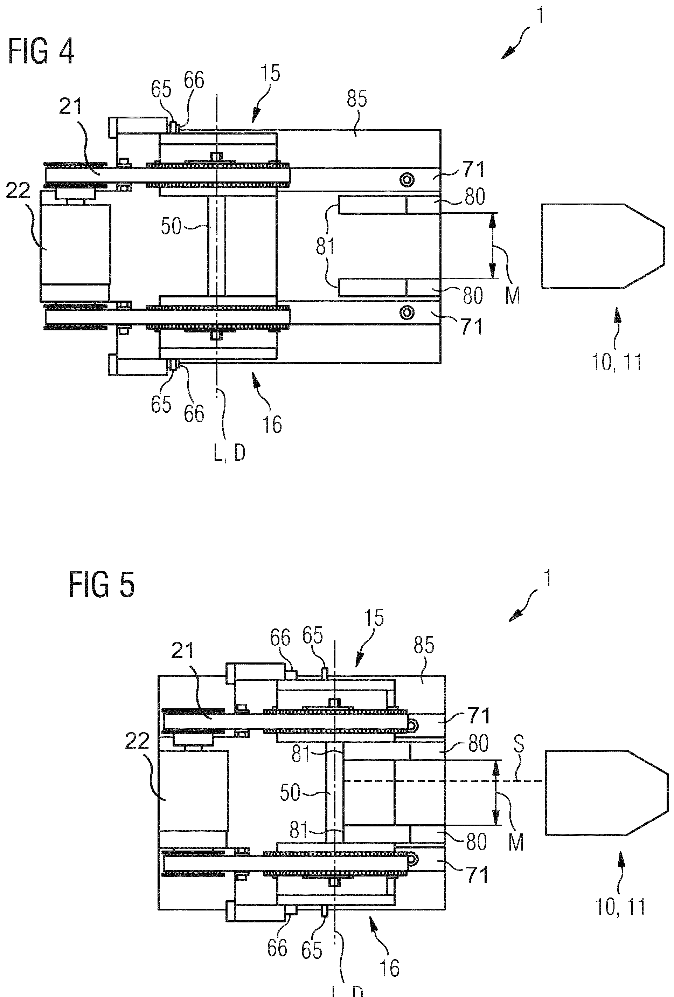

Fig. 4 zeigt die in der Fig. 1 gezeigte beispielhafte Ausführungsform in vereinfachter Darstellung in einer Draufsicht in einer ersten Position. Zusätzlich zeigt die Fig. 4 ein Messobjekt 50, das durch die erste und zweite Halterung 15, 16 befestigt ist. Die Antriebseinheit (Motor 22 und Riemen 21), die erste und zweite Halterung 15, 16 sowie die Sperreinrichtungen 66 sind verschiebbar auf Laufschienen 71 angeordnet. Die Laufschienen 71 sind auf einer Bodenplatte 85 angeordnet. Auf den Laufschienen 71 können die vorgenannten Komponenten auf die Strahlungsquelle 10 zubewegt und von dieser wegbewegt werden. In der in der Fig. 4 gezeigten ersten Position sind die vorgenannten Komponenten in einem von der Strahlungsquelle 10 wegbewegten Zustand. Man erkennt, dass der Vorsprung 65 auf der Sperreinrichtung 66 aufsitzt. Die Spannbacken 61 sind in geöffnetem Zustand. Rechts auf der Bodenplatte 85 sind zwei Anschläge 80 angeordnet. Die Anschläge 80 weisen jeweils eine Anschlagsfläche 81 auf. Die Anschlagsfläche ist in Richtung des durch die erste und zweite Halterung 15, 16 eingespannten Messobjekts 50 gerichtet.

Fig. 5 zeigt die in der Fig. 1 gezeigte beispielhafte Ausführungsform in vereinfachter Darstellung in einer Draufsicht in einer zweiten Position. Bei der in der Fig. 5 gezeigten zweiten Position sind die Antriebseinheit (Motor 22 und Riemen 21), die erste und zweite Halterung 15, 16 sowie die Sperreinrichtungen 66 in einem auf die Strahlungsquelle 10 zubewegten Zustand. Man erkennt, dass der Vorsprung 65 nicht auf der Sperreinrichtung 66 aufsitzt. Die Spannbacken 61 sind in geschlossenem Zustand. Das Messobjekt 50 steht mit den Anschlagsflächen 81 der rechts auf der Bodenplatte 85 angeordneten zwei Anschläge 80 in Kontakt.

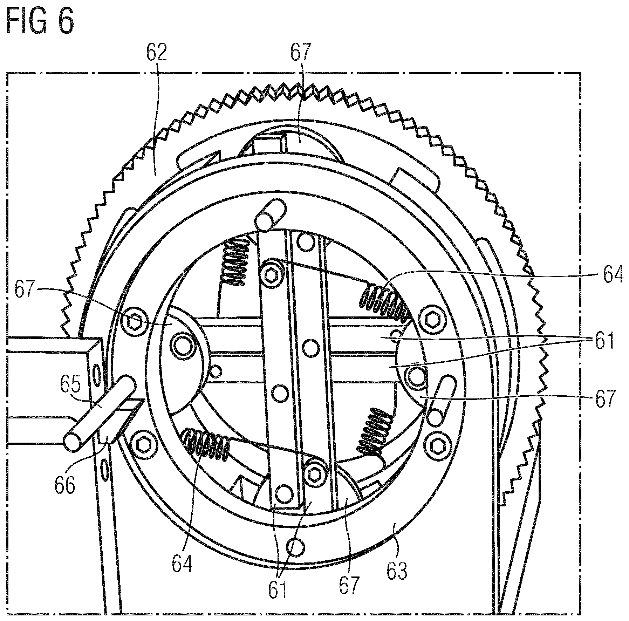

Fig. 6 zeigt die zweite Halterung 16 in einer Seitenansicht. Die zweite Halterung 16 weist einen inneren Spannring 63 und einen äußeren Spannring 62 auf. Der innere Spannring 63 ist zu dem äußeren Spannring 62 koaxial und verdrehbar angeordnet. Die zweite Halterung 16 weist ferner vier Spannbacken 61 auf, die dazu ausgebildet sind, dass das zu vermessende Messobjekt zwischen diesen einspannbar ist. Zwei Spannbacken sind an jeweils einem Ende mit einer ersten Scheibe 67 und an jeweils einem anderen Ende mit einer zweiten Scheibe 67 derart drehbar verbunden, dass ein Drehen der ersten und zweiten Scheibe 67 dazu führt, dass sich die zwei Spannbacken 61 aufeinander zu oder voneinander wegbewegen. Zwei weitere Spannbacken sind an jeweils einem Ende mit einer dritten Scheibe 67 und an jeweils einem anderen Ende mit einer vierten Scheibe 67 derart drehbar verbunden, dass ein Drehen der dritten und vierten Scheibe 67 dazu führt, dass sich die zwei Spannbacken 61 aufeinander zu oder voneinander wegbewegen. Die vier Scheiben sind mit dem inneren Spannring 63 verbunden, wobei sie über den Umfang des inneren Spannrings 63 regelmäßig verteilt sind. Die vier Scheiben 67 sind jeweils drehbar mit dem inneren Spannring 63 verbunden und über eine Stift-Nut-Verbindung mit dem äußeren Spannring 62 derart gekoppelt, dass eine relative Drehung des äußeren Spannrings 62 zu dem inneren Spannring 63 dazu führt, dass sich die vier Scheiben 67 um ihre Drehachse drehen und sich dadurch die an den Scheiben 67 befestigten Spannbacken 61 aufeinander zu oder voneinander wegbewegen. Federelemente 64 (Schraubenfedern) sind mit dem inneren Spannring 63 und den Spannbacken 61 derart verbunden, dass sie die Spannbacken 61 in die geschlossene Stellung vorspannen. Der innere Spannring 63 wird durch den Vorsprung 65, der gegen die Sperreinrichtung 66 (Schnapper) stößt, daran gehindert, sich gegen den Uhrzeigersinn weiterzudrehen. In der Fig. 6 befinden sich die Spannbacken 61 in geschlossener Stellung.

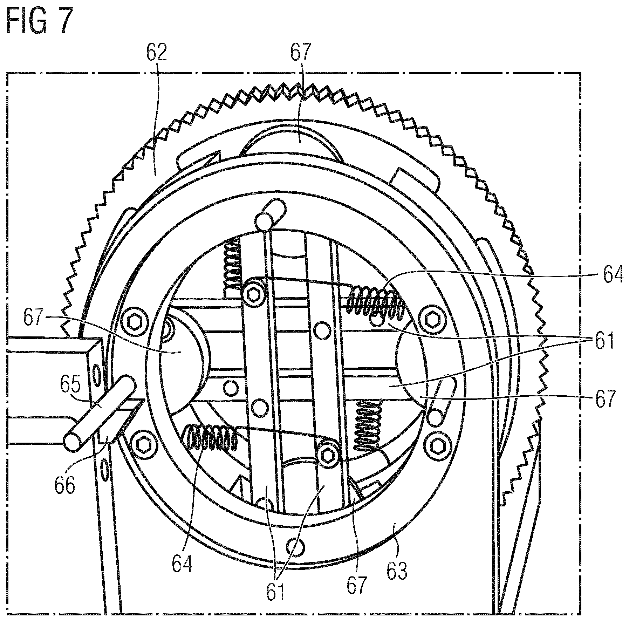

Fig. 7 zeigt die in der Fig. 6 dargestellte zweite Halterung 16 in geöffneter Stellung. Wie in der Fig. 7 zu erkennen ist, ist die Position des inneren Spannrings 63 unverändert, aber die Scheiben 67 und der äußere Spannring 62 haben sich im Vergleich zur Fig. 6 gegen den Uhrzeigersinn gedreht. Dadurch haben sich die Spannbacken 61 geöffnet.

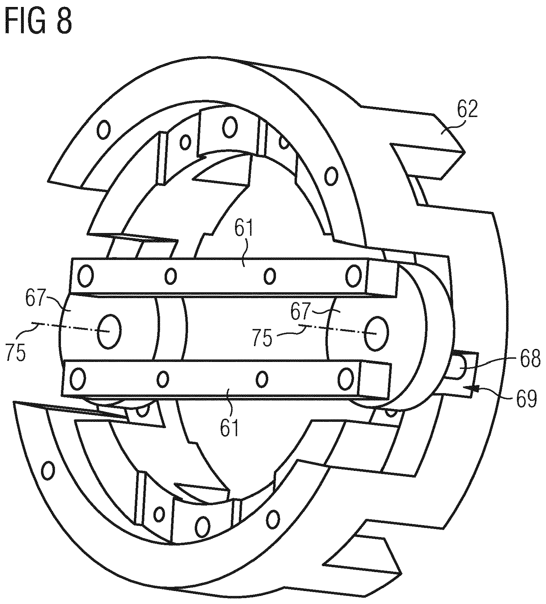

Fig. 8 zeigt zur Verdeutlichung der Kopplung des äußeren Spannrings 62 mit den Scheiben 67 einzelne Bauteile der in der Fig. 6 und Fig. 7 dargestellten zweiten Halterung 16. Zwei Spannbacken 61 sind an jeweils einem Ende mit einer ersten Scheibe 67 und an jeweils einem anderen Ende mit einer zweiten Scheibe 67 derart drehbar verbunden, das ein Drehen der ersten und zweiten Scheibe 67 dazu führt, dass sich die zwei Spannbacken 67 aufeinander zu oder voneinander wegbewegen. Die erste und zweite Scheibe 61 ist jeweils derart an dem inneren Spannring 63 (nicht dargestellt) befestigt, dass sie um ihre Drehachse 75 drehbar gelagert sind. Die erste und zweite Scheibe 61 sind mit dem äußeren Spannring 62 (nur teilweise dargestellt) über einen Stift 68, der in eine Nut 69 in dem äußeren Spannring 62 ragt, derart gekoppelt, dass ein relatives Verdrehen des äußeren Spannrings 62 zu dem inneren Spannring 63 dazu führt, dass sich die Scheiben 67 jeweils um ihre Drehachse 75 drehen.

### Gewerbliche Anwendbarkeit

Im Folgenden wird mit Bezug auf die in den Fig. 4 und Fig. 5 gezeigten beispielhaften Ausführungsformen der Betrieb der erfindungsgemäßen Vorrichtung beschrieben.

Zur berührungslosen Vermessung wird ein Messobjekt 50 bereitgestellt. Dies kann zum Beispiel ein abgelängter Kabelabschnitt oder eine abgelängter Drahtabschnitt sein.

Zum Befestigen des Messobjekts 50 in der ersten und zweiten Halterung 15, 16 der Vorrichtung 1, wird die erste und zweite Halterung 15, 16 auf den Laufschienen 71 von der Strahlungsquelle 10 wegbewegt und in eine in der Fig. 4 gezeigte erste Position gebracht. Die Laufschienen 71 sind auf der Bodenplatte 85 angebracht. In der ersten Position wird das Messobjekt 50 derart mit der ersten und zweiten Halterung 15, 16 befestigt, dass das Messobjekt 50 um seine Längsachse L drehbar ist.

Zum Befestigen wird das Messobjekt 50 zwischen Spannbacken der ersten und zweiten Halterung 15, 16 eingespannt. Zum Öffnen der Spannbacken wird der äußere Spannring zu dem inneren Spannring der ersten bzw. der zweiten Halterung verdreht. Dazu wird der äußere Spannring mit der Antriebseinheit gegen den Uhrzeigersinn (mit Bezug auf die in Fig. 3 gezeigte Ansicht) solange gedreht, bis der Vorsprung 65 des inneren Spannrings von oben auf der (nicht abgeschrägten Seite) der Sperreinrichtung aufsitzt (siehe Fig. 3). Die Bewegung des inneren Spannrings wird dadurch blockiert und der äußere Spannring dreht sich gegen den Uhrzeigersinn weiter, wodurch die Spannbacken geöffnet werden. Wie in der Fig. 4 zu erkennen ist, sitzt der Vorsprung 65 auf der Sperreinrichtung 66 auf. Die Spannvorrichtung befindet sich in geöffnetem Zustand. Durch ein Drehen des äußeren Spannrings im Uhrzeigersinn (mit Bezug auf die in Fig. 3 gezeigte Ansicht) können die Spannbacken wieder geschlossen werden und das Messobjekt somit in den Spannbacken eingespannt.

Wenn das Messobjekt 50 mit der ersten und zweiten Halterung 15, 16 befestigt ist, wird die erste und zweite Halterung 15, 16 auf den Laufschienen 71 auf die Strahlungsquelle 10 zubewegt und in eine in der Fig. 5 gezeigte zweite Position gebracht. In der zweiten Position ist das Messobjekt 50 über einen Messbereich M, der sich zwischen der ersten und zweiten Halterung 15, 16 und in Richtung der Längsachse L des Messobjekts 50 erstreckt, mit dem Messtrahl S der Strahlungsquelle 10 bestrahlbar. Zur berührungslosen Vermessung wird das Messobjekt 50 in der zweiten Position mit dem Messtrahl S der Strahlungsquelle 10 bestrahlt. Während des Bestrahlens wird das Messobjekts 50 mithilfe des Motors 22 (über die Riemen und die erste und zweite Halterung 15, 16) im Uhrzeigersinn gedreht und die von dem Messobjekt 50 reflektierten Strahlen werden mit dem Sensor 11 erfasst. Das Messobjekt 50 kann kontinuierlich, vorzugsweise mit gleichbleibender Geschwindigkeit gedreht werden. Das Messobjekt 50 kann mindestens einmal komplett um seine Längsachse L gedreht

Die Vorrichtung 1 weist erfindungsgemäß einen Anschlag 80 mit einer Anschlagsfläche 81 auf, wobei der Anschlag 80 derart positioniert ist, dass das Messobjekt 50 in der zweiten Position mit der Anschlagsfläche 81 des Anschlags 80 in Berührung steht. Die zweite Position kann entsprechend dadurch bestimmt werden, dass die erste und zweite Halterung 15, 16 mit dem eingespannten Messobjekt 50 solange in Richtung der Strahlungsquelle 10 verschoben wird, bis das Messobjekt 50 gegen die Anschlagsflächen 81 der Anschläge 80 stößt. Während des Drehens des Messobjekts 50 gleitet das Messobjekt an der Anschlagsfläche 81 entlang und wird somit durch die Anschlagsfläche 81 in Position gehalten.

Die Vorrichtung kann ferner eine Recheneinheit zur Bestimmung des Verlaufs von Messgrößen wie beispielsweise einer Schichtdicke oder einer Oberflächenbeschaffenheit für den bestrahlten Bereich des Messobjekts 50 aufweisen. Mithilfe dieser Vorrichtung 1 lässt sich ein hochgenauer Scan der gesamten Drahtoberfläche erstellen, das Ergebnis ist eine hochaufgelöste 3D Punktwolke. Mithilfe von entsprechender Software lässt sich die 3D Punktwolke zu einem Gesamtbild verrechnen und das Gesamtbild, aus dem Messgrößen wie beispielsweise der Schichtdickenverlauf über den bestrahlten Bereich dargestellt sind, in Form einer Bilddatei an einem Monitor, in Tabellenformat oder dergleichen ausgeben.

Nachdem die Vermessung abgeschlossen ist, können die erste und zweite Halterung 15, 16 auf den Laufschienen 71 wieder in die erste Position verschoben werden und das Messobjekt aus der aus Spannbacken gebildeten Aufnahme entfernt werden. Zum Öffnen der Spannbacken wird auf das oben beschriebene Vorgehen zum Einspannen des Messobjekts verwiesen.

Die Steuerungseinheit ist so ausgebildet, dass sie sowohl die Antriebseinheit als auch die Strahlungsquelle steuern kann. Die Steuerungseinheit kann ferner eine Funktionalität aufweisen, die das Verschieben von der ersten und zweiten Halterung 15, 16 von der ersten Position in die zweite Position und umgekehrt ermöglicht. Dadurch lässt sich der Automatisierungsgrad der Vorrichtung nochmals erhöhen.

Es wird explizit erklärt, dass alle Merkmale, die in der Beschreibung und/oder den Ansprüchen offenbart sind, dazu bestimmt sind, separat und unabhängig voneinander sowohl für den Zweck der ursprünglichen Offenbarung als auch für den Zweck der Beschränkung der beanspruchten Erfindung unabhängig von der Zusammenstellung der Merkmale in den Ausführungsformen und/oder den Ansprüchen offenbart zu werden. Es wird explizit erklärt, dass alle Wertebereiche oder Angaben von Gruppen von Objekten jeden möglichen Zwischenwert oder jedes mögliche dazwischen liegende Objekt sowohl für den Zweck der ursprünglichen Offenbarung als auch für den Zweck der Beschränkung der beanspruchten Erfindung, insbesondere zur Bestimmung der Grenzen von Wertebereichen offenbaren.

### Bezugszeichenliste

- 1: Vorrichtung
- 3: Arbeitsplatte
- 10: Strahlungsquelle
- 11: Sensor
- 15: erste Halterung
- 16: zweite Halterung
- 20: Antriebseinheit
- 21: Riemen
- 22: Motor
- 30: Steuerungseinheit
- 40: Recheneinheit
- 50: Messobjekt
- 61: Spannbacken
- 62: äußerer Spannring
- 63: innerer Spannring
- 64: Federelement
- 65: Vorsprung
- 66: Sperreinrichtung
- 67: Scheibe
- 68: Stift
- 69: Nut
- 70: verschiebbarer Schlitten
- 71: Laufschiene
- 75: Drehachse der Scheibe
- 80: Anschlag
- 81: Anschlagsfläche
- 85: Bodenplatte
- D: Drehachse der ersten und zweiten Halterung
- L: Längsachse des Messobjekts
- M: Messbereich
- S: Messtrahl

## Patentansprüche

1. Vorrichtung (1) zur berührungslosen Vermessung eines sich drehenden Messobjekts (50) wie beispielsweise eines Kabelabschnitts, aufweisend:
- eine Strahlungsquelle (10), die dazu ausgebildet ist, einen Messtrahl (S) auszusenden, um damit das Messobjekt (50) zu bestrahlen,
- einen Sensor (11), der dazu ausgebildet ist, die von dem Messobjekt (50) reflektierten Strahlen zu erfassen,
- eine erste Halterung (15) und eine zweite, von der ersten Halterung (15) beabstandete zweite Halterung (16), die um eine gemeinsame Drehachse (D) drehbar gelagert und dazu ausgebildet sind, dass Messobjekt (50) derart zu befestigen, dass das Messobjekt (50)
- um seine Längsachse (L) drehbar ist, und
- über einen Messbereich (M), der sich zwischen der ersten und der zweiten Halterung (15, 16) und in Richtung der Längsachse (L) des Messobjekts (50) erstreckt, mit dem Messtrahl (S) der Strahlungsquelle (10) bestrahlbar ist,
- eine Antriebseinheit (20), die mit der ersten und/oder zweiten Halterung (15, 16) in Antriebsverbindung steht und dazu ausgebildet ist, die erste und/oder zweite Halterung (15, 16) und das darin gehaltene Messobjekt (50) zu drehen,
- eine Steuerungseinheit (30), die dazu ausgebildet ist, die Strahlungsquelle (10) und die Antriebseinheit (20) derart zu steuern, dass das drehbar befestigte Messobjekt (50)
- in dem Messbereich (M) mit dem Messtrahl (S) der Strahlungsquelle (10) bestrahlt wird und
- während der Bestrahlung um seine Längsachse (L) gedreht wird, **gekennzeichnet durch**
- einen verschiebbaren Schlitten (70), auf dem die erste und die zweite Halterung (15, 16) derart angeordnet sind, dass das Messobjekt (50) von einer ersten, von der Strahlungsquelle (10) weg verschobenen Position in eine zweite, zur Strahlungsquelle (10) hin verschobenen Position verschiebbar ist,
- einen Anschlag (80), der eine Anschlagsfläche (81) aufweist, die dazu ausgebildet ist, dass das Messobjekt (50), während es sich bei der Bestrahlung um seine Längsachse (L) dreht, an der Anschlagsfläche (81) entlanggleitet, wobei der Anschlag (80) derart positioniert ist, dass das Messobjekt (50) in der zweiten Position mit der Anschlagsfläche (81) des Anschlags (80) in Berührung steht, und
- ein Federelement, das den verschiebbaren Schlitten (70) in Richtung der Strahlungsquelle (10) drückt.

2. Vorrichtung (1) nach Anspruch 1, bei der die Steuerungseinheit (30) dazu ausgebildet ist, die Strahlungsquelle (10) und die Antriebseinheit (20) derart zu steuern, dass das drehbar befestigte Messobjekt (50) während der Bestrahlung kontinuierlich, vorzugsweise mit gleichbleibender Geschwindigkeit gedreht wird.

3. Vorrichtung (1) nach Anspruch 1 oder 2, bei der die Steuerungseinheit (30) dazu ausgebildet ist, die Strahlungsquelle (10) und die Antriebseinheit (20) derart zu steuern, dass das drehbar befestigte Messobjekt (50) während der Bestrahlung mindestens einmal komplett um seine Längsachse (L) gedreht wird.

4. Vorrichtung (1) nach einem der vorangehenden Ansprüche, ferner ausweisend:
eine Recheneinheit (40), die dazu ausgebildet ist, aus den von dem Messobjekt (50) reflektierten und mit dem Sensor (11) erfassten Strahlen den Verlauf von Messgrößen wie beispielsweise einer Schichtdicke oder einer Oberflächenbeschaffenheit für den bestrahlten Bereich des Messobjekts (50) zu bestimmen.

5. Vorrichtung (1) nach einem der vorangehenden Ansprüche, bei der die Strahlungsquelle (10) und der Sensor (11) Teil eines interferometrischen Messystems sind.

6. Vorrichtung (1) nach einem der vorangehenden Ansprüche, bei der die erste und/oder die zweite Halterung (15, 16) aufweist:
- Spannbacken (61), die beweglich angeordnet und dazu ausgebildet sind, so aufeinander zu bewegt zu werden, dass sie das Messobjekt (50) festspannen.

7. Vorrichtung (1) nach Anspruch 6, bei der die erste und/oder zweite Halterung (15, 16) aufweist:
- einen drehbar gelagerten äußeren Spannring (62), der mit der Antriebseinheit (20) in Antriebsverbindung steht, und
- einen inneren Spannring (63), der zu dem äußeren Spannring (62) koaxial und verdrehbar angeordnet ist, wobei der äußere Spannring (62) und der innere Spannring (63) derart mit den Spannbacken (61) gekoppelt sind, dass sich die Spannbacken (61) durch ein Verdrehen des äußeren Spannrings (62) zu dem inneren Spannring (63) in eine erste Richtung voneinander weg bewegen und durch ein Verdrehen in eine der ersten Richtung entgegensetzten zweiten Richtung aufeinander zu bewegen.

8. Vorrichtung (1) nach Anspruch 7, bei der der innere Spannring (63) einen in Axialrichtung des inneren Spannrings (63) vorstehenden Vorsprung (65) wie einen Stift aufweist und die Vorrichtung (1) eine Sperreinrichtung (66) aufweist, die derart ausgebildet ist, dass sie den Vorsprung (65) des inneren Spannrings (63) in einer ersten Drehrichtung des inneren Spannrings (63) passieren lässt und in einer zweiten Drehrichtung des inneren Spannrings (63) nicht passieren lässt.

9. Verfahren zur berührungslosen Vermessung eines sich drehenden Messobjekts (50) wie beispielsweise eines Kabelabschnitts, aufweisend:
- Bereitstellen einer Strahlungsquelle (10), die dazu ausgebildet ist, einen Messtrahl (S) auszusenden, um damit das Messobjekt (50) zu bestrahlen,
- Bereitstellen eines Sensors (11), der dazu ausgebildet ist, die von dem Messobjekt (50) reflektierten Strahlen zu erfassen,
- Befestigen des Messobjekts (50) mit einer Befestigung (15, 16) derart, dass das Messobjekt (50) um seine Längsachse (L) drehbar ist und über einen Messbereich (M) mit dem Messtrahl (S) der Strahlungsquelle (10) bestrahlbar ist,
- Lagern der Befestigung (15, 16) auf einem verschiebbaren Schlitten (70) derart, dass die Befestigung (15, 16) von einer ersten, von der Strahlungsquelle (10) weg verschobenen Position in eine zweite, zur Strahlungsquelle (10) hin verschobenen Position verschiebbar ist,
- Positionieren eines Anschlags (80) mit einer Anschlagsfläche (81) derart, dass das Messobjekt (50) in der zweiten Position mit der Anschlagsfläche (81) des Anschlags (80) in Berührung steht,
- Verschieben der Befestigung solange in Richtung der Strahlungsquelle (10), bis das Messobjekt (50) gegen die Anschlagsfläche (81) des Anschlags (80) stößt,
- Drücken des verschiebbaren Schlittens mit einem Federelement in Richtung der Strahlungsquelle (10),
- Bestrahlen des Messobjekts (50) mit dem Messtrahl (S) der Strahlungsquelle (10) und Drehen der Messobjekts (50) während des Bestrahlens, wobei das Messobjekt (50) während des Drehens an der Anschlagsfläche (81) entlanggleitet und somit durch die Anschlagsfläche (81) in Position gehalten wird, und
- Erfassen der von dem Messobjekt (50) reflektierten Strahlen mit dem Sensor (11).

10. Verfahren nach Anspruch 9, bei der der Schritt des Bestrahlens des Messobjekts aufweist:
- Bestrahlen des befestigten Messobjekts (50) mit dem Messtrahl (S) der Strahlungsquelle (10) und kontinuierliches Drehen des Messobjekts (50) während des Bestrahlens, vorzugsweise kontinuierliches Drehen mit gleichbleibender Geschwindigkeit.

11. Verfahren nach Anspruch 9 oder 10, bei der der Schritt des Bestrahlens des Messobjekts (50) aufweist:
- Bestrahlen des befestigten Messobjekts (50) mit dem Messtrahl (S) der Strahlungsquelle (10) und Drehen des Messobjekts (50) während des Bestrahlens mindestens einmal komplett um seine Längsachse (L).

12. Verfahren nach einem der Ansprüche 9 bis 11, bei dem das Messobjekt (50) durch eine erste Halterung (15) und eine zweite Halterung (16) befestigt wird und sich der Messbereich (M) zwischen der ersten Halterung (15) und der zweiten Halterung (16) in Richtung der Längsachse (L) des Messobjekts (50) erstreckt.

13. Verfahren nach einem der Ansprüche 9 bis 12, ferner aufweisend:
- Bestimmen des Verlaufs von Messgrößen wie beispielsweise einer Schichtdicke oder einer Oberflächenbeschaffenheit für den bestrahlten Bereich des Messobjekts (50) aus den von dem Messobjekt (50) reflektierten und mit dem Sensor (11) erfassten Strahlen.

14. Verfahren nach einem der Ansprüche 9 bis 13, wobei der Schritt des Befestigens des Messobjekts (50) aufweist:
- Lagern einer Befestigung des Messobjekts (50) derart, dass die Befestigung auf die Strahlungsquelle (10) zu und von der Strahlungsquelle (10) weg verschiebbar ist,
- Positionieren der Befestigung in einer ersten, von der Strahlungsquelle (10) weg verschobenen Position,
- Befestigen des Messobjekts (50) mit der Befestigung in der ersten Position derart, dass das Messobjekt (50) um seine Längsachse (L) drehbar ist, und
- Verschieben der Befestigung in eine zu der Strahlungsquelle (10) hin verschobenen zweiten Position, in der das Messobjekt (50) über einen Messbereich (M), der sich in Richtung der Längsachse (L) des Messobjekts (50) erstreckt, mit dem Messtrahl (S) der Strahlungsquelle (10) bestrahlbar ist.

## Claims

1. An apparatus (1) for the contactless measurement of a rotating measurement object (50) such as for example a cable section, comprising:
- a radiation source (10) which is configured to emit a measuring beam (S) to irradiate the measurement object (50) therewith,
- a sensor (11) which is configured to detect the beams reflected by the measurement object (50),
- a first holder (15) and a second holder (16) spaced apart from the first holder (15), which are mounted rotatably about a common axis of rotation (D) and are configured to fasten the measurement object (50) such that the measurement object (50)
- is rotatable about its longitudinal axis (L), and
- is irradiatable with the measuring beam (S) of the radiation source (10) over a measuring region (M) which extends between the first and the second holder (15, 16) and in the direction of the longitudinal axis (L) of the measurement object (50),
- a drive unit (20) which is in drive connection with the first and/or second holder (15, 16) and is configured to rotate the first and/or second holder (15, 16) and the measurement object (50) held therein,
- a control unit (30) which is configured to control the radiation source (10) and the drive unit (20) such that the rotatably fastened measurement object (50)
- is irradiated in the measuring region (M) with the measuring beam (S) of the radiation source (10) and
- is rotated about its longitudinal axis (L) during the irradiation, **characterized by**
- a displaceable slide (70) on which the first and the second holder (15, 16) are arranged such that the measurement object (50) is displaceable from a first position displaced away from the radiation source (10) into a second position displaced towards the radiation source (10),
- a stop (80) which has a stop surface (81) that is configured such that the measurement object (50), while it rotates about its longitudinal axis (L) during the irradiation, slides along the stop surface (81), wherein the stop (80) is positioned such that the measurement object (50) is in contact with the stop surface (81) of the stop (80) in the second position, and
- a spring element which presses the displaceable slide (70) towards the radiation source (10).

2. The apparatus (1) according to claim 1, in which the control unit (30) is configured to control the radiation source (10) and the drive unit (20) such that the rotatably fastened measurement object (50) is rotated continuously, preferably at a constant speed, during the irradiation.

3. The apparatus (1) according to claim 1 or 2, in which the control unit (30) is configured to control the radiation source (10) and the drive unit (20) such that the rotatably fastened measurement object (50) is rotated at least once completely about its longitudinal axis (L) during the irradiation.

4. The apparatus (1) according to any of the preceding claims, further comprising:
a computing unit (40) which is configured to determine, from the beams reflected by the measurement object (50) and detected with the sensor (11), the profile of measured variables such as for example a layer thickness or a surface condition for the irradiated region of the measurement object (50).

5. The apparatus (1) according to any of the preceding claims, in which the radiation source (10) and the sensor (11) are part of an interferometric measuring system.

6. The apparatus (1) according to any of the preceding claims, in which the first and/or the second holder (15, 16) comprises:
- clamping jaws (61) which are movably arranged and configured to be moved towards one another such that they clamp the measurement object (50).

7. The apparatus (1) according to claim 6, in which the first and/or second holder (15, 16) comprises:
- a rotatably mounted outer clamping ring (62) which is in drive connection with the drive unit (20), and
- an inner clamping ring (63) which is arranged coaxially with and rotatably relative to the outer clamping ring (62), wherein the outer clamping ring (62) and the inner clamping ring (63) are coupled to the clamping jaws (61) such that the clamping jaws (61) move away from one another by a rotation of the outer clamping ring (62) relative to the inner clamping ring (63) in a first direction, and move towards one another by a rotation in a second direction opposite to the first direction.

8. The apparatus (1) according to claim 7, in which the inner clamping ring (63) has a projection (65), such as a pin, projecting in the axial direction of the inner clamping ring (63), and the apparatus (1) has a locking device (66) which is configured such that it allows the projection (65) of the inner clamping ring (63) to pass in a first direction of rotation of the inner clamping ring (63) and does not allow it to pass in a second direction of rotation of the inner clamping ring (63).

9. A method for the contactless measurement of a rotating measurement object (50) such as for example a cable section, comprising:
- providing a radiation source (10) which is configured to emit a measuring beam (S) to irradiate the measurement object (50) therewith,
- providing a sensor (11) which is configured to detect the beams reflected by the measurement object (50),
- fastening the measurement object (50) with a mount (15, 16) such that the measurement object (50) is rotatable about its longitudinal axis (L) and is irradiatable with the measuring beam (S) of the radiation source (10) over a measuring region (M),
- supporting the mount (15, 16) on a displaceable slide (70) such that the mount (15, 16) is displaceable from a first position displaced away from the radiation source (10) into a second position displaced towards the radiation source (10),
- positioning a stop (80) with a stop surface (81) such that the measurement object (50) is in contact with the stop surface (81) of the stop (80) in the second position,
- displacing the mount towards the radiation source (10) until the measurement object (50) strikes against the stop surface (81) of the stop (80),
- pressing the displaceable slide with a spring element towards the radiation source (10),
- irradiating the measurement object (50) with the measuring beam (S) of the radiation source (10) and rotating the measurement object (50) during the irradiation, wherein the measurement object (50) slides along the stop surface (81) during the rotation and is thereby held in position by the stop surface (81), and
- detecting the beams reflected by the measurement object (50) with the sensor (11).

10. The method according to claim 9, in which the step of irradiating the measurement object comprises:
- irradiating the fastened measurement object (50) with the measuring beam (S) of the radiation source (10) and continuously rotating the measurement object (50) during the irradiation, preferably continuously rotating at a constant speed.

11. The method according to claim 9 or 10, in which the step of irradiating the measurement object (50) comprises:
- irradiating the fastened measurement object (50) with the measuring beam (S) of the radiation source (10) and rotating the measurement object (50) at least once completely about its longitudinal axis (L) during the irradiation.

12. The method according to any of claims 9 to 11, in which the measurement object (50) is fastened by a first holder (15) and a second holder (16), and the measuring region (M) extends between the first holder (15) and the second holder (16) in the direction of the longitudinal axis (L) of the measurement object (50).

13. The method according to any of claims 9 to 12, further comprising:
- determining the profile of measured variables such as for example a layer thickness or a surface condition for the irradiated region of the measurement object (50) from the beams reflected by the measurement object (50) and detected with the sensor (11).

14. The method according to any of claims 9 to 13, wherein the step of fastening the measurement object (50) comprises:
- supporting a mount of the measurement object (50) such that the mount is displaceable towards the radiation source (10) and away from the radiation source (10),
- positioning the mount in a first position displaced away from the radiation source (10),
- fastening the measurement object (50) with the mount in the first position such that the measurement object (50) is rotatable about its longitudinal axis (L), and
- displacing the mount into a second position displaced towards the radiation source (10), in which the measurement object (50) is irradiatable with the measuring beam (S) of the radiation source (10) over a measuring region (M) which extends in the direction of the longitudinal axis (L) of the measurement object (50).

## Revendications

1. Dispositif (1) pour la mesure sans contact d'un objet à mesurer (50) en rotation tel que, par exemple, un tronçon de câble, comprenant :
- une source de rayonnement (10) qui est configurée pour émettre un faisceau de mesure (S) afin d'irradier l'objet à mesurer (50) avec celui-ci,
- un capteur (11) qui est configuré pour détecter les rayons réfléchis par l'objet à mesurer (50),
- un premier support (15) et un deuxième support (16) espacé du premier support (15), lesquels sont montés rotatifs autour d'un axe de rotation (D) commun et sont configurés pour fixer l'objet à mesurer (50) de telle manière que l'objet à mesurer (50)
- est rotatif autour de son axe longitudinal (L), et
- peut être irradié par le faisceau de mesure (S) de la source de rayonnement (10) sur une zone de mesure (M) qui s'étend entre le premier et le deuxième support (15, 16) et dans la direction de l'axe longitudinal (L) de l'objet à mesurer (50),
- une unité d'entraînement (20) qui est en liaison d'entraînement avec le premier et/ou le deuxième support (15, 16) et qui est configurée pour mettre en rotation le premier et/ou le deuxième support (15, 16) et l'objet à mesurer (50) maintenu dans celui-ci ou ceux-ci,
- une unité de commande (30) qui est configurée pour commander la source de rayonnement (10) et l'unité d'entraînement (20) de telle manière que l'objet à mesurer (50) fixé de manière rotative
- est irradié dans la zone de mesure (M) par le faisceau de mesure (S) de la source de rayonnement (10) et
- est mis en rotation autour de son axe longitudinal (L) pendant l'irradiation, **caractérisé par**
- un chariot coulissant (70) sur lequel le premier et le deuxième support (15, 16) sont disposés de telle manière que l'objet à mesurer (50) peut coulisser d'une première position, éloignée de la source de rayonnement (10), vers une deuxième position, rapprochée de la source de rayonnement (10),
- une butée (80) présentant une surface de butée (81) qui est configurée pour que l'objet à mesurer (50), pendant qu'il tourne autour de son axe longitudinal (L) lors de l'irradiation, glisse le long de la surface de butée (81), la butée (80) étant positionnée de telle sorte que l'objet à mesurer (50), dans la deuxième position, est en contact avec la surface de butée (81) de la butée (80), et
- un élément à ressort qui pousse le chariot coulissant (70) en direction de la source de rayonnement (10).

2. Dispositif (1) selon la revendication 1, dans lequel l'unité de commande (30) est configurée pour commander la source de rayonnement (10) et l'unité d'entraînement (20) de telle manière que l'objet à mesurer (50) fixé de manière rotative est mis en rotation de façon continue, de préférence à une vitesse constante, pendant l'irradiation.

3. Dispositif (1) selon la revendication 1 ou 2, dans lequel l'unité de commande (30) est configurée pour commander la source de rayonnement (10) et l'unité d'entraînement (20) de telle manière que l'objet à mesurer (50) fixé de manière rotative est mis en rotation au moins une fois complètement autour de son axe longitudinal (L) pendant l'irradiation.

4. Dispositif (1) selon l'une des revendications précédentes, comprenant en outre :
une unité de calcul (40) qui est configurée pour déterminer, à partir des rayons réfléchis par l'objet à mesurer (50) et détectés par le capteur (11), l'évolution de grandeurs de mesure telles que, par exemple, une épaisseur de couche ou un état de surface pour la zone irradiée de l'objet à mesurer (50).

5. Dispositif (1) selon l'une des revendications précédentes, dans lequel la source de rayonnement (10) et le capteur (11) font partie d'un système de mesure interférométrique.

6. Dispositif (1) selon l'une des revendications précédentes, dans lequel le premier et/ou le deuxième support (15, 16) comprend :
- des mâchoires de serrage (61) qui sont disposées de manière mobile et configurées pour être déplacées l'une vers l'autre de telle sorte qu'elles serrent l'objet à mesurer (50).

7. Dispositif (1) selon la revendication 6, dans lequel le premier et/ou le deuxième support (15, 16) comprend :
- une bague de serrage extérieure (62) montée rotative, laquelle est en liaison d'entraînement avec l'unité d'entraînement (20), et
- une bague de serrage intérieure (63) qui est disposée de manière coaxiale et rotative par rapport à la bague de serrage extérieure (62), la bague de serrage extérieure (62) et la bague de serrage intérieure (63) étant couplées aux mâchoires de serrage (61) de telle sorte que les mâchoires de serrage (61) s'éloignent l'une de l'autre par une rotation de la bague de serrage extérieure (62) par rapport à la bague de serrage intérieure (63) dans une première direction, et se rapprochent l'une de l'autre par une rotation dans une deuxième direction opposée à la première direction.

8. Dispositif (1) selon la revendication 7, dans lequel la bague de serrage intérieure (63) présente une saillie (65) faisant saillie dans la direction axiale de la bague de serrage intérieure (63), telle qu'un ergot, et le dispositif (1) comprend un dispositif de blocage (66) qui est configuré de telle manière qu'il laisse passer la saillie (65) de la bague de serrage intérieure (63) dans un premier sens de rotation de la bague de serrage intérieure (63) et ne la laisse pas passer dans un deuxième sens de rotation de la bague de serrage intérieure (63).

9. Procédé pour la mesure sans contact d'un objet à mesurer (50) en rotation tel que, par exemple, un tronçon de câble, comprenant :
- la fourniture d'une source de rayonnement (10) qui est configurée pour émettre un faisceau de mesure (S) afin d'irradier l'objet à mesurer (50) avec celui-ci,
- la fourniture d'un capteur (11) qui est configuré pour détecter les rayons réfléchis par l'objet à mesurer (50),
- la fixation de l'objet à mesurer (50) avec un dispositif de fixation (15, 16) de telle manière que l'objet à mesurer (50) est rotatif autour de son axe longitudinal (L) et peut être irradié sur une zone de mesure (M) par le faisceau de mesure (S) de la source de rayonnement (10),
- le montage du dispositif de fixation (15, 16) sur un chariot coulissant (70) de telle manière que le dispositif de fixation (15, 16) peut coulisser d'une première position, éloignée de la source de rayonnement (10), vers une deuxième position, rapprochée de la source de rayonnement (10),
- le positionnement d'une butée (80) avec une surface de butée (81) de telle manière que l'objet à mesurer (50), dans la deuxième position, est en contact avec la surface de butée (81) de la butée (80),
- le coulissement de la fixation en direction de la source de rayonnement (10) jusqu'à ce que l'objet à mesurer (50) vienne buter contre la surface de butée (81) de la butée (80),
- la sollicitation du chariot coulissant avec un élément à ressort en direction de la source de rayonnement (10),
- l'irradiation de l'objet à mesurer (50) avec le faisceau de mesure (S) de la source de rayonnement (10) et la mise en rotation de l'objet à mesurer (50) pendant l'irradiation, l'objet à mesurer (50) glissant le long de la surface de butée (81) pendant la rotation et étant ainsi maintenu en position par la surface de butée (81), et
- la détection des rayons réfléchis par l'objet à mesurer (50) avec le capteur (11).

10. Procédé selon la revendication 9, dans lequel l'étape d'irradiation de l'objet à mesurer comprend :
- l'irradiation de l'objet à mesurer (50) fixé avec le faisceau de mesure (S) de la source de rayonnement (10) et la mise en rotation continue de l'objet à mesurer (50) pendant l'irradiation, de préférence une rotation continue à vitesse constante.

11. Procédé selon la revendication 9 ou 10, dans lequel l'étape d'irradiation de l'objet à mesurer (50) comprend :
- l'irradiation de l'objet à mesurer (50) fixé avec le faisceau de mesure (S) de la source de rayonnement (10) et la mise en rotation de l'objet à mesurer (50) pendant l'irradiation au moins une fois complètement autour de son axe longitudinal (L).

12. Procédé selon l'une des revendications 9 à 11, dans lequel l'objet à mesurer (50) est fixé par un premier support (15) et un deuxième support (16), et la zone de mesure (M) s'étend entre le premier support (15) et le deuxième support (16) dans la direction de l'axe longitudinal (L) de l'objet à mesurer (50).

13. Procédé selon l'une des revendications 9 à 12, comprenant en outre :
- la détermination de l'évolution de grandeurs de mesure telles que, par exemple, une épaisseur de couche ou un état de surface pour la zone irradiée de l'objet à mesurer (50) à partir des rayons réfléchis par l'objet à mesurer (50) et détectés par le capteur (11).

14. Procédé selon l'une des revendications 9 à 13, dans lequel l'étape de fixation de l'objet à mesurer (50) comprend :
- le montage d'une fixation de l'objet à mesurer (50) de telle manière que la fixation peut coulisser vers la source de rayonnement (10) et en s'éloignant de la source de rayonnement (10),
- le positionnement de la fixation dans une première position, éloignée de la source de rayonnement (10),
- la fixation de l'objet à mesurer (50) avec la fixation dans la première position de telle manière que l'objet à mesurer (50) est rotatif autour de son axe longitudinal (L), et
- le coulissement de la fixation vers une deuxième position, rapprochée de la source de rayonnement (10), dans laquelle l'objet à mesurer (50) peut être irradié par le faisceau de mesure (S) de la source de rayonnement (10) sur une zone de mesure (M) qui s'étend dans la direction de l'axe longitudinal (L) de l'objet à mesurer (50).
